(19) Europäisches Patentamt
European Patent Office
Office européen des brevets

(11) **EP 4 365 272 A1**

(12) **EUROPEAN PATENT APPLICATION**
published in accordance with Art. 153(4) EPC

(43) Date of publication:
**08.05.2024 Bulletin 2024/19**

(21) Application number: **22832604.7**

(22) Date of filing: **28.04.2022**

(51) International Patent Classification (IPC):
**C12C 12/04** (2006.01)        **C12G 3/025** (2019.01)
**C12H 3/00** (2019.01)

(52) Cooperative Patent Classification (CPC):
**C12C 12/04; C12G 3/025; C12H 3/00**

(86) International application number:
**PCT/JP2022/019423**

(87) International publication number:
**WO 2023/276444 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2021 JP 2021106620**

(71) Applicant: **Asahi Group Holdings, Ltd.
Tokyo 130-8602 (JP)**

(72) Inventors:
• **NAKAYAMA, Wataru
Moriya-shi, Ibaraki 302-0106 (JP)**
• **MATSUSHIMA, Takemasa
Moriya-shi, Ibaraki 302-0106 (JP)**

(74) Representative: **Müller-Boré & Partner
Patentanwälte PartG mbB
Friedenheimer Brücke 21
80639 München (DE)**

(54) **BEER-FLAVORED LOW-ALCOHOL BEVERAGE**

(57)    An object of the invention is to provide a low-alcohol beer-taste beverage having a swelling taste, a good balance between the intensity of rich taste and the intensity of aroma, and a fruity and flowery aroma. The means for solving the problem is a low-alcohol beer-taste beverage including: an alcohol-removed wort fermented liquid; 1000 to 7000 ppb of linalool; 180 to 320 ppb of geraniol; 35 to 75 ppb of beta-citronellol; 3 to 15 ppb of myrcene; and 0.05 to 0.5 ppb of beta-ionone.

**Description**

Technical Field

The present invention relates to low-alcohol beer-taste beverages. A "low-alcohol beer-taste beverage" means a beer-taste beverage that has a lower alcohol concentration than regular beer. Low-alcohol beer-taste beverages have an alcohol concentration of, for example, 4 v/v% or less, or less than 1 v/v%. The meaning of low-alcohol beer-taste beverages also includes non-alcohol beer-taste beverages that are substantially free of alcohol. The term "alcohol" means ethanol.

Background Art

In recent years, the development of happoshu and new genres has led to diversification of the types of products appearing in the beer market. As a result, in addition to Pilsner-type beers, which have conventionally dominated the mainstream of the beer market, the popularity of beers providing a variety of flavors, such as craft beers and Belgian beers, is increasing. Among others, the flavor with emphasized bitterness and hop flavors, which is provided by high-temperature fermented beers such as India Pale Ale, has become the standard of craft beers.

Also regarding low-alcohol beer-taste beverages, there is a demand not only for a flavor that is modest in body and hop aroma, and has excellent sharpness as provided by Pilsner-type beers, but also for a flavor that is rich in hop aroma and heavy, which is reminiscent of so-called craft beers.

Patent Document 1 discloses a beer-taste fermented malt beverage in which the alcohol concentration is reduced to less than 1% by removing alcohol from a wort fermented liquid. It discloses that the beer-taste fermented malt beverage of Patent Document 1 has a beer-like flavor. On the other hand, Patent Document 1 does not disclose the demand for craft beer or the means for achieving a flavor reminiscent of craft beers.

Patent Document 2 discloses a beer-taste beverage containing citronellol, geraniol, nerol and linalool. These flavorings have a citrus-like aroma and achieve an effect of suppressing the deterioration of flavor and the development of undesirable aromas due to storage of beer-taste beverages. In Patent Document 2, the flavors that deteriorate due to storage are "citrusy aroma" and "fresh aroma", whereas the undesirable flavors that are generated due to storage are "sweet, burnt-like aroma" and "aroma of oxidized beer".

In Non-Patent Document 1, it was tested how the addition of geraniol and beta-citronellol to a model liquid of coriander beer, which contains linalool at a concentration of 1000 ppb that was 200 to 300 times higher than the threshold value, changed the flavor of the model liquid. Fig. 5 describes the flavor profiles of the model liquids tested. The flavor profiles are that the model liquid with only 1000 ppb linalool had a higher score in the item of "flowery", while the model liquid with 1000 ppb linalool + 25 ppb geraniol + 20 ppb beta-citronellol had a higher score in the items of "fruity", "citrus", and "green" in addition to this. From this, it is understood that linalool has an aroma-enhancing effect on geraniol and beta-citronellol in beer.

[Prior Art Documents]

[Patent Document]

[Patent Document 1] WO 2021/070930 A1
[Patent Document 2] JP 2020-96560 A

[Non-Patent Document]

[Non-Patent Document 1]
Kiyoshi Takoi, "Interpretation of craft beer aroma with geraniol metabolism: Analysis of the interaction of hop aroma components (3)" Brewer's Association, Vol. 109, No. 12, 2014, pp. 874-881

Summary of Invention

[Problems to be solved by the invention]

In beer-taste beverages obtained by being subjected to an alcohol-removing treatment after fermentation, the low-molecular-weight saccharides in wort are consumed during the fermentation process, and the alcohol is also removed, resulting in weaker sweetness and richness. In addition, in beer-taste beverages obtained by being subjected to an alcohol-removing treatment after fermentation, volatile aroma components are removed, and the odor produced when grains are fermented, the so-called fermented soybeans or potato odor becomes more noticeable. In other words, the flavor of low-alcohol beer-taste beverages will become a flavor which has a taste that is bitter, thin, weak in richness, has an unpleasant aroma, and is unable to be reminded of craft beers.

Also, in low-alcohol beer-taste beverages, it is possible to emphasize the fruity and floral aroma reminiscent of craft beer by including hop-derived aroma components such as citronellol, geraniol and linalool. However, if the aroma is simply emphasized, the balance between the intensity of rich taste and the intensity of aroma is lost, and only the aroma is unnaturally emphasized.

The present invention solves the above problem, the object of which is to provide a low-alcohol beer-taste beverage having a swelling and frumentaceous taste, a good balance between the intensity of rich taste and the intensity of aroma, and a fruity and flowery aroma.

In this specification, the swelling taste means that the afterglow of aroma is felt along with the taste of beer. The rich taste means a taste resulting from an extract component of beer.

[Means for solving the problem]

Embodiments of the present invention are as follows.

[1] A low-alcohol beer-taste beverage including:

an alcohol-removed wort fermented liquid;
1000 to 7000 ppb of linalool;
180 to 320 ppb of geraniol;
35 to 75 ppb of beta-citronellol;
3 to 15 ppb of myrcene; and
0.05 to 0.5 ppb of beta-ionone.

[2] The low-alcohol beer-taste beverage according to the above [1] having an alcohol concentration of less than 1 v/v%.

[3] The low-alcohol beer-taste beverage according to the above [1] or [2] having a bitterness value of 25 BU or more and 35 BU or less.

[4] The low-alcohol beer-taste beverage according to any one of the above [1] to [3], wherein the wort fermented liquid has an apparent extract concentration of 5 w/v% or more and 9 w/v% or less.

[5] The low-alcohol beer-taste beverage according to any one of the above [1] to [4], wherein the wort fermented liquid has a malt use ratio of 50% or more.

[6] The low-alcohol beer-taste beverage according to any one of the above [1] to [5], wherein the wort fermented liquid is a wort bottom fermented liquid.

[7] A method for producing a low-alcohol beer-taste beverage, including: combining

an alcohol-removed wort fermented liquid;
1000 to 7000 ppb of linalool;
180 to 320 ppb of geraniol;
35 to 75 ppb of beta-citronellol;
3 to 15 ppb of myrcene; and
0.05 to 0.5 ppb of beta-ionone.

[8] The method for producing a low-alcohol beer-taste beverage according to the above [7] including: adjusting the alcohol concentration to less than 1 v/v%.

[9] The method for producing a low-alcohol beer-taste beverage according to the above [7] or [8], including: adjusting the bitterness value from 25 BU or more and 35 BU or less.

[10] The method for producing a low-alcohol beer-taste beverage according to any one of the above [7] to [9], including: adjusting the apparent extract concentration of the wort fermented liquid from 5 w/v% or more to 9 w/v% or less.

Effect of the invention:

According to the present invention, a low-alcohol beer-taste beverage having a swelling taste and a frumentaceous taste, a good balance between the intensity of rich taste and the intensity of aroma, and a fruity and flowery aroma is obtained. In the low-alcohol beer-taste beverage of the present invention, among others, a hop-like miscellaneous taste is reproduced, and a heavy beer taste and a heavy aroma are realized.

The low-alcohol beer-taste beverage contains an alcohol-removed wort fermented liquid, and greater amounts of hop aroma components than regular beer.

<Alcohol-Removed Wort Fermented Liquid>

The alcohol-removed wort fermented liquid means a liquid obtained by removing alcohol from the wort fermented liquid. The method for removing alcohol includes a method for vaporizing alcohol, a method for removing alcohol with a reverse osmosis membrane, and the like. For the alcohol-removed wort fermented liquid, alcohol may be removed to an extent that the alcohol content of the low-alcohol beer-taste beverage in the final product becomes the desired concentration.

Alcohol removal is performed employing a conventionally known method. For example, a method of distilling under reduced pressure may be employed. In this case, it is preferable to use a method that allows to leave residual flavor components that have been produced during the alcoholic fermentation process.

The alcohol-removed wort fermented liquid has a fermented soybeans and/or potato odor. Fermented soybeans and potato odors are unpleasant as they are. However, it was found that the fermented soybeans and potato odors, when combined with aromas produced by a large amount of hop aroma components, was able to give the taste of beer (i.e., beer taste) a frumentaceous and swelling taste, and the rich taste also became stronger.

<Wort Fermented Liquid>

The wort fermented liquid is a liquid obtained by fermenting the wort used in the production of regular beer. The wort fermented liquid may be a wort top fermented liquid or a wort bottom fermented liquid. The wort top fermented liquid is a wort fermented liquid obtained by inoculating wort with top-fermenting yeast and fermenting it at normal fermentation conditions, for example, 15 to 25°C for several days. The wort bottom fermented liquid is a wort fermented liquid in which wort is inoculated with bottom fermenting yeast and fermented at normal fermentation conditions, for example, at around 10°C for about one week.

<Production of wort fermented liquid>

The method for producing a wort fermented liquid will be described below. From the viewpoint of providing a flavor able to be reminded of craft beer, the wort fermented liquid with emphasized bitterness and hop aroma is preferably produced.

First, crushed malt, auxiliary raw materials such as barley, and warm water are placed into a preparation tank and mixed to prepare maische. The preparation of the maische may be performed by a conventional method. For example, first, by holding at 35 to 60°C for 20 to 90 minutes, proteins derived from raw materials are decomposed into amino acids and the like, and then, a saccharifying step is conducted. At this stage, as necessary, enzyme agents, as mentioned below, such as a saccharifying enzyme and a protease, and flavor components such as spices and herbs, and the like may be added other than the main raw materials and the auxiliary raw materials.

Then, by gradually raising the temperature of the maische and holding it at a predetermined temperature for a certain period of time, starchy component is saccharified by utilizing an enzyme derived from malt or an enzyme added to the maische. The temperature and time during the saccharifying treatment may be appropriately determined in consideration of the type of enzyme used, the amount of maische, the quality of the intended wort fermented liquid, and the like, which may be carried out by holding it, for example, at 60 to 72°C for 30 to 90 minutes. After the saccharifying treatment, the maische is held at 76 to 78°C for about 10 minutes and then filtered in a wort filtration tank to obtain a transparent saccharide liquid. Further, when performing the saccharifying treatment, an appropriate amount of the enzyme agent may be added within a necessary range.

Grains to be saccharified contain malt. The malt content in grains to be saccharified is not particularly limited, but is 25 w/w% or more, preferably 50 w/w% or more, and more preferably 67 w/w% or more. The grains to be saccharified may be 100% malt. The ratio (w/w%) of malt to all raw materials excluding water is referred to as a malt use ratio. The higher the malt content in the grains, the stronger the malt-derived umami, rich taste and robust feeling of drinking of the obtained wort.

From the viewpoint of producing a wort fermented liquid with a frumentaceous taste emphasized, the malt use ratio is preferably 50w/w% or more.

Auxiliary raw materials mean raw materials other than malt and hops. Examples of the auxiliary raw materials are starchy raw materials such as barley, wheat, corn starch, corn grits, rice, and Kaoliang, and saccharide raw materials such as liquid sugar and sugar. Here, the liquid sugar is produced by decomposing and saccharifying starchy component with an acid or a saccharifying enzyme, and mainly contains glucose, maltose, maltotriose and the like. In addition, spices, herbs, fruits and the like used for the purpose of imparting or improving flavor are also included in the auxiliary raw materials.

The saccharifying enzyme means an enzyme for decomposing starchy component into saccharide. As the saccharifying enzyme, there are, for example, α-amylase, glucoamylase, pullanase and the like.

Wort boiling operation may be carried out according to the method and conditions which are commonly carried out when producing beer. For example, a saccharide liquid, the pH of which has been adjusted, is transferred to a boiling kettle, and boiled. During the time from the start of boiling of the saccharide liquid until being left to stand, hops are added in the whirlpool. Hop extract or a component extracted from hops may be used as the hops. The saccharide liquid is then transferred to a precipitation tank called a whirlpool. After hop lees and curdled protein, produced by boiling are removed, the resulting liquid is cooled to an appropriate temperature by a plate cooler. Wort is obtained by the above wort boiling operation.

The obtained wort is fermented. Fermentation of wort may be carried out according to a conventional method. For example, beer yeast is inoculated into the cooled wort, and the wort is transferred to a fermentation tank to carry out alcoholic fermentation. For the type of yeast to be inoculated, both top-fermenting yeast and bottom-fermenting yeast may be used.

The apparent final degree of fermentation of the wort fermented liquid is preferably 30 to 100% or more. If the apparent final degree of fermentation is less than 30%, amino nitrogen is not sufficiently reduced, and a large amount of acids may need to be added in order to sufficiently lower the pH of the wort fermented liquid. The apparent final degree of fermentation of the wort fermented liquid is preferably 35 to 80%, and more preferably 40 to 60%.

The degree of fermentation is an important index which indicates to what extent fermentation has progressed in beer after fermentation, i.e., the progress of fermentation. Further, the final degree of fermentation means the ratio of the extract that can be assimilated by beer yeast based on the raw wort extract. Here, the extract that can be assimilated by beer yeast is what is obtained by subtracting an extract contained in the produced beer (that is, an extract remaining after fermenting all the extracts that can be used by beer yeast (referred to as a final extract) from the raw wort extract. The apparent final degree of fermentation means the final degree of fermentation which is calculated by using, as the value of final extract, the apparent extract, that is, the extract concentration (%) derived from the specific gravity of alcohol-containing beer.)

The extract means the non-volatile solid component. The term extract means the non-volatile solid component itself, the amount of the non-volatile solid component, or the concentration of the non-volatile solid component depending on the context.

The apparent final degree of fermentation Vend of a wort fermented liquid may be obtained by, for example, the following formula (1).

$$\text{Vend (\%)} = \{(P - Eend)/P\} \times 100 \qquad (1)$$

wherein P is a raw wort extract and Eend is an apparent final extract.

The raw wort extract P is the theoretical wort extract value before alcoholic fermentation, which is back calculated from the alcohol concentration and the extract value of produced beer according to Balling's formula. Specifically, it may be obtained by the method shown in Analytica-EBC (9.4) (2007). In addition, the apparent final extract Eend may be determined by collecting beer in a flask, adding a large amount of fresh pressed yeast, fermenting the mixture at 25°C while stirring until the extract value does not decrease any more (24 hours), and measuring the apparent extract value in the remaining beer.

The apparent final extract Eend may show a negative value because it is calculated from the alcohol-containing specific density of the final extract. As a result, the apparent final degree of fermentation may exceed 100%.

The apparent final degree of fermentation may be controlled by adjusting, for example, the saccharifying conditions, whether or not the enzyme is used when saccharifying the raw material, the type and combining amount of the raw material, and the like. For example, if the saccharifying time is increased, the concentration of saccharide which can be used by yeast may be increased, and the apparent final degree of fermentation may be increased.

After completion of the fermentation, furthermore, the obtained wort fermented liquid is matured as a maturing process in a liquor storage tank, stored under a low temperature condition of about 0°C, and stabilized. Next, as a filtration step, yeast, proteins and the like are removed by filtering the wort fermented liquid after maturation to obtain a wort fermented liquid.

The obtained wort fermented liquid has an apparent extract concentration of 3 to 9 w/v%. If the apparent extract concentration is less than 3 w/v%, the beer-like flavor of the obtained beer taste beverage can disappear and watery feeling can arise. On the other hand, if the apparent extract concentration is exceeds 9 w/v%, the beer-like sharpness of the obtained beer taste beverage can become weak. The apparent extract concentration is preferably 6 to 9 w/v%, and more preferably 7 to 9 w/v%.

<Hop Aroma Components>

In the present specification, hop aroma components are aroma components which are contained in hops, and can be transferred from the hops to wort or a wort fermented liquid. The hop aroma components include, for example, linalool, geraniol, beta-citronellol, myrcene, beta-ionone and the like. Since they are volatile, they may be reduced and removed with the alcohol during alcohol removal of the wort fermented liquid.

The hop aroma components used in the present invention may be artificially chemically synthesized or derived from a natural substance, for example, the one obtained as a fermentation metabolite by yeast. When isomers (e.g., structural isomers and optical isomers) are present in the aroma components, the aroma component may be any isomer or a mixture of these isomers.

Linalool is a monoterpene alcohol represented by the formula C10H18O, which is an aroma component having a floral-like aroma. In the low-alcohol beer-taste beverage of the present invention, the lower limit of the concentration of linalool is 1000 ppb or more, preferably 3000 ppb or more, and more preferably 5000 ppb or more from the viewpoint of efficiently suppressing fermented soybeans odor or potato odor. The upper limit of the concentration of linalool is, for example, 7000 ppb or less, preferably 6500 ppb or less, and more preferably 6000 ppb or less from the viewpoint of preventing the balance with the intensity of rich taste from being lost because the aroma is too much emphasized.

In one preferred embodiment, the concentration of the linalool in the low-alcohol beer-taste beverage may be 1000 to 8000 ppb, preferably 3000 to 7500 ppb, and more preferably 4000 to 7000 ppb.

Geraniol is a monoterpene alcohol represented by $C_{10}H_{18}O$, which is an aroma component having a rose-like aroma. In the low-alcohol beer-taste beverage of the present invention, the concentration of geraniol is 180 to 320 ppb, preferably 200 to 300 ppb or more, and more preferably 220 to 280 ppb from the viewpoint of suppressing fermented soybeans odor or potato odor, and emphasizing a frumentaceous taste or swelling taste. The upper limit and lower limit of the numerical ranges of the present specification may be optionally selected and combined.

Citronellol is a monoterpene alcohol represented by the formula $C_{10}H_{20}O$, and is an aroma component having a rose-like aroma. In the low-alcohol beer-taste beverage of the present invention, the concentration of citronellol is 35 to 75 ppb, preferably 40 to 70 ppb, and more preferably 50 to 65 ppb from the viewpoint of suppressing fermented soybeans odor or potato odor, and emphasizing a frumentaceous taste or swelling taste.

Myrcene is a monoterpene represented by the formula C10H16 and is an aroma component having a sweet sour aroma. In the low-alcohol beer-taste beverage of the present invention, the concentration of myrcene is 3 to 15 ppb, preferably 4 to 14 ppb, and more preferably 6 to 12 ppb, from the viewpoint of suppressing fermented soybeans odor or potato odor, and emphasizing a frumentaceous taste or swelling taste.

beta-ionone is a terpenoid represented by the formula $C_{13}H_{20}O$, and is an aroma component having a sweet fruit-like aroma. In the low-alcohol beer-taste beverage of the present invention, the concentration of beta-ionone is 0.05 to 0.5 ppb, preferably 0.1 to 0.4 ppb, and more preferably 0. 15 to 0.3 ppb from the viewpoint of suppressing fermented soybeans odor or potato odor, and emphasizing a frumentaceous taste or swelling taste.

<Production of Low-Alcohol Beer-Taste Beverage>

The method for producing a low-alcohol beer-taste beverage using an alcohol-removed wort fermented liquid is described below. The low-alcohol beer-taste beverage can be produced by adding predetermined amounts of the aforementioned hop aroma components to the alcohol-removed wort fermented liquid. The addition of the hop aroma components may be done before or after any of the following steps.

To the alcohol-removed wort fermented liquid, a bitter substance is added as necessary to adjust the bitterness value. Isolated iso-alpha acids may be used as the bitter substance. The iso-alpha acids are contained in hops, and they may also be employed as hops or hop extracts. The hops or hop extracts mean hop cones, a ground product thereof, an extraction liquid obtained by extracting these with water or boiling water, a concentrate and a dried product of the extraction liquid.

The bitterness value of beer-taste beverages is adjusted to have a bitterness equivalent to craft beer. Specifically, the bitterness value of the beer-taste beverage is adjusted to 20 BU or more, preferably 25 to 35 BU, and more preferably 28 to 30 BU. By adjusting the bitterness value of low-alcohol beer-taste beverages to 20 BU or more, a hop-like miscellaneous taste is reproduced, and a heavy beer taste and heavy aroma are achieved.

In one preferred embodiment, the bitterness value of the low-alcohol beer-taste beverage may be 26 to 30 BU.

A pH adjusting agent is added to the alcohol-removed wort fermented liquid to lower the pH as necessary. By sufficiently lowering the pH, bacteriostatic properties required for marketing the beverage is imparted, and the beer-taste fermented malt beverage of the present invention is obtained. The beer-taste fermented malt beverage of the present invention may have a low pH to such an extent that the spoilage prevention effect is obtained. The specific upper limit of the pH is less than 4.2, preferably less than 4.1, and more preferably less than 4.0. On the other hand, the specific lower limit of the pH is 3.0 or more, preferably 3.3 or more, and more preferably 3.6 or more.

The types of pH adjusting agents are not limited. Acids, which are food additives and which may be used for beverages, foods or production process thereof, salts thereof, and beer raw materials having pH lowering ability, may be used as pH adjusting agents. Examples of the beer raw materials having a pH lowering ability include sour malt, dark malt and the like. Preferred pH adjusting agents are phytic acid, citric acid, lactic acid, lactic acid bacteria, phosphoric acid, malic acid, sulfurous anhydride, tartaric acid, gluconic acid, acetic acid, succinic acid, adipic acid, itaconic acid, fumaric acid and combinations thereof. More preferred pH adjusting agents are phytic acid, lactic acid, lactic acid bacteria, phosphoric acid, malic acid, sulfurous anhydride, tartaric acid and combinations thereof. Considering the effect on the flavor of beer-taste beverages, phytic acid, which has less sourness among these, is most preferred.

To the wort fermented liquid, carbon dioxide gas is added through a carbonation step. This results in obtaining the low-alcohol beer-taste beverage of the present invention. The amount of carbon dioxide gas added is adjusted so that it has the same foaming property as beer. Specifically, the amount of carbon dioxide gas added is adjusted so as to be 1.2 to 5.0 gas volumes, preferably 2.4 to 3.5 gas volumes, and more preferably 2.6 to 3.2 gas volumes.

The present invention will be described in more detail with reference to the following examples, but the present invention is not limited these.

[Examples]

[Production of low-alcohol beer-taste beverages with emphasized aroma]

Crushed malt, water, and corn starch were placed into a preparation kettle, the mixture was gelatinized at 70°C and liquefied at 100°C. Next, the crushed malt, an enzyme, and warm water were placed into a preparation tank, and protein was decomposed at around 55°C. The liquid was transferred from the preparation kettle to a preparation tank, and saccharifying was performed at a temperature in the range of 60 to 76°C. This saccharified liquid was filtered with a lauter that was a filter tank, then transferred to a boiling kettle, hops were added, and boiled for 60 minutes. After boiling, warm water equivalent to the evaporated component was added, hot trub was removed in a whirlpool tank, followed by cooling to 10°C using a plate cooler to obtain cold wort. Bottom fermenting beer yeast was added to this wort and ferment it at around 10°C for 7 days, after which the beer yeast was removed. The tank was changed, the resulting wort was matured for 7 days, then cooled to around -1°C and stabilized for 14 days. After dilution by adding gas-removed water, filtration was conducted using diatomaceous earth to obtain a wort fermented liquid (wort bottom fermented liquid).

After adjusting the gas pressure of the wort fermented liquid (liquid temperature 0°C) obtained above to 0.20 MPa, the liquid temperature was adjusted from 55 to 65°C with a heat exchanger, and the resulting liquid was sprayed into a gas-removing tank under a reduced pressure of about 90 mbar to vaporize carbon dioxide gas and aroma components.

The wort fermented liquid in which the aroma components were vaporized was heated to around 50°C using a plate cooler. Thereafter, it was brought into contact with water vapor heated to around 50°C in a column at a reduced pressure of around 90 mbar to adsorb volatile components to the water vapor so that alcohol and volatile components were removed. The alcohol content of the obtained alcohol-removed wort fermented liquid was less than 1 v/v%, and the apparent extract concentration was 8 w/v%.

As hop aroma components, the concentrations of linalool, geraniol, beta-citronellol, myrcene, and beta-ionone were determined using a stir bar sorptive extraction method (SBSE method: Stir Bar Sorptive Extraction). The concentrations were all 0 ppb.

The hop aroma components were prepared as flavorings to emphasize the aroma. These were then contained in the alcohol-removed wort fermented liquid in predetermined amounts. The types and amounts of volatile hop aroma components are shown in Tables 1 to 7. The bitterness value was adjusted to 28 BU by adding isomerized hop extracts, and the pH was adjusted to 3.8 by adding phytic acid. In this manner, samples 1 to 28 that were low-alcohol beer-taste beverages with an emphasized aroma were produced.

Non-Patent Document 1, Fig. 5 shows the results of aroma interactions confirmed employing model liquids in which the contents of linalool, geraniol and beta-citronellol in craft beer using coriander were simulated. In other words, changes in flavor profile were not so great when either 25 ppb geraniol or 25 ppb beta-citronellol was added to 1000 ppb linalool (Figs. 5B and 5C). In contrast, when 1000 ppb linalool, 25 ppb geraniol, and 20 ppb beta-citronellol were mixed, the flavor profile significantly changed, especially for the items of "fruity," "citrus," and "green" (Fig. 5D).

In this manner, Non-Patent Document 1 describes the excess linalool relative to its threshold has the effect of emphasizing the aromas of geraniol and beta-citronellol. Therefore, in the present example, as a control, in sample 1, the aroma component composition, i.e., 1000 ppb linalool, 25 ppb geraniol and 20 ppb beta-citronellol shown in Non-Patent Document 1, Fig 5D was reproduced.

[Sensory Evaluation]

Non-alcoholic beer-taste beverages produced were subjected to sensory evaluation by five trained panelists. The beverages all had a fruity and flowery aroma.

The evaluation items shown in Tables 1 to 7, namely, "intensity of fermented soybeans odor", "intensity of potato odor", "intensity of frumentaceous taste", "swelling taste" and "balance between intensity of rich taste and intensity of aroma" were scored on a 5-level scale with the score of sample 1 being 3, and the average score of 5 persons was used as the score for each sample.

Scoring criteria for "intensity of fermented soybeans odor", "intensity of potato odor", "inteisity of frumentaceous taste", and "swelling taste".

    5: Stronger than sample 1
    4: Slightly stronger than sample 1
    3: Equivalent to sample 1
    2: Slightly weaker than sample 1
    1: Weaker than sample 1

Scoring criteria for "balance between intensity of rich taste and intensity of aroma"

    5: Having better balance than sample 1
    4: Slightly having better balance than sample 1
    3: Equivalent to sample 1
    2: Slightly having poorer balance than sample 1
    1: Having poorer balance than sample 1

Craft beer-like flavor was evaluated as good "A" when the average score of "intensity of fermented soybeans odor" and "intensity of potato odor" was 2.0 or less, and the average score of "inteisity of frumentaceous taste", "swelling taste" and "balance between intensity of rich taste and intensity of flavor" was 3.5 or more.

[Table 1]

| | | Sample 1 | Sample 2 | Sample 3 | Sample 4 | Sample 5 |
|---|---|---|---|---|---|---|
| Composition of beverage sample | Apparent extract concentration (w/v%) | 8.0 | 8.0 | 8.0 | 8.0 | 8.0 |
| | Bitterness value (BU) | 28.0 | 28.0 | 28.0 | 28.0 | 28.0 |
| | Linalool concentration (ppb) | 1000 | 500 | 1000 | 2000 | 3000 |
| | Geraniol concentration (ppb) | 25 | 250 | 250 | 250 | 250 |
| | beta-citronellol concentration (ppb) | 20 | 60 | 60 | 60 | 60 |
| | Myrcene concentration (ppb) | 10 | 10 | 10 | 10 | 10 |
| | beta-ionone concentration (ppb) | 0.2 | 0.2 | 0.2 | 0.2 | 0.2 |

(continued)

| | | Sample 1 | Sample 2 | Sample 3 | Sample 4 | Sample 5 |
|---|---|---|---|---|---|---|
| Sensory evaluation | Intensity of fermented soybeans odor | 3.0 | 3.0 | 2.8 | 2.8 | 2.8 |
| | Intensity of potato odor | 3.0 | 3.0 | 2.8 | 2.8 | 2.8 |
| | Intensity of frumentaceous taste | 3.0 | 3.0 | 3.2 | 3.2 | 3.2 |
| | Swelling taste | 3.0 | 3.0 | 3.6 | 3.6 | 3.6 |
| | Balance between intensity of rich taste and intensity of aroma | 3.0 | 2.8 | 3.2 | 3.2 | 3.2 |
| | Craft beer-like flavor | | | | | |

[Table 2]

| | | Sample 6 | Sample 7 | Sample 8 | Sample 9 | Sample 10 |
|---|---|---|---|---|---|---|
| Composition of beverage sample | Apparent extract concentration (w/v %) | 8.0 | 8.0 | 8.0 | 8.0 | 8.0 |
| | Bitterness value (BU) | 28.0 | 28.0 | 28.0 | 28.0 | 28.0 |
| | Linalool concentration (ppb) | 4000 | 5000 | 6000 | 7000 | 8000 |
| | Geraniol concentration (ppb) | 250 | 250 | 250 | 250 | 250 |
| | beta-citronellol concentration (ppb) | 60 | 60 | 60 | 60 | 60 |
| | Myrcene concentration (ppb) | 10 | 10 | 10 | 10 | 10 |
| | beta-ionone concentration (ppb) | 0.2 | 0.2 | 0.2 | 0.2 | 0.2 |
| Sensory evaluation | Intensity of fermented soybeans odor | 2.8 | 1.6 | 1.0 | 1.0 | 1.0 |
| | Intensity of potato odor | 2.8 | 1.6 | 1.0 | 1.0 | 1.0 |
| | Intensity of frumentaceous taste | 3.2 | 4.0 | 4.4 | 4.4 | 4.4 |
| | Swelling taste | 3.6 | 3.8 | 4.2 | 4.2 | 4.2 |
| | Balance between intensity of rich taste and intensity of aroma | 3.2 | 3.8 | 4.2 | 3.8 | 3.2 |
| | Craft beer-like flavor | | A | A | A | |

[Table 3]

|  |  | Sample 11 | Sample 12 | Sample 7 | Sample 13 |
|---|---|---|---|---|---|
| Composition of beverage sample | Apparent extract concentration (w/v %) | 8.0 | 8.0 | 8.0 | 8.0 |
|  | Bitterness value (BU) | 28.0 | 28.0 | 28.0 | 28.0 |
|  | Linalool concentration (ppb) | 5500 | 5500 | 5500 | 5500 |
|  | Geraniol concentration (ppb) | 150 | 200 | 250 | 300 |
|  | beta-citronellol concentration (ppb) | 60 | 60 | 60 | 60 |
|  | Myrcene concentration (ppb) | 10 | 10 | 10 | 10 |
|  | beta-ionone concentration (ppb) | 0.2 | 0.2 | 0.2 | 0.2 |
| Sensory evaluation | Intensity of fermented soybeans odor | 1.6 | 1.4 | 1.0 | 1.0 |
|  | Intensity of potato odor | 1.6 | 1.4 | 1.0 | 1.0 |
|  | Intensity of frumentaceous taste | 3.4 | 3.8 | 4.4 | 4.4 |
|  | Swelling taste | 3.4 | 3.8 | 4.2 | 4.2 |
|  | Balance between intensity of rich taste and intensity of aroma | 3.4 | 4.0 | 4.2 | 3.8 |
|  | Craft beer-like flavor |  | A | A | A |

[Table 4]

|  |  | Sample 14 | Sample 15 | Sample 16 | Sample 7 | Sample 17 |
|---|---|---|---|---|---|---|
| Composition of beverage | Apparent extract concentration (w/v %) | 8.0 | 8.0 | 8.0 | 8.0 | 8.0 |
|  | Bitterness value (BU) | 28.0 | 28.0 | 28.0 | 28.0 | 28.0 |
|  | Linalool concentration (ppb) | 5500 | 5500 | 5500 | 5500 | 5500 |
|  | Geraniol concentration (ppb) | 250 | 250 | 250 | 250 | 250 |
|  | beta-citronellol concentration (ppb) | 30 | 40 | 50 | 60 | 70 |
|  | Myrcene concentration (ppb) | 10 | 10 | 10 | 10 | 10 |
|  | beta-ionone concentration (ppb) | 0.2 | 0.2 | 0.2 | 0.2 | 0.2 |
| Sensory evaluation | Intensity of fermented soybeans odor | 1.8 | 1.6 | 1.6 | 1.0 | 1.0 |
|  | Intensity of potato odor | 1.8 | 1.6 | 1.6 | 1.0 | 1.0 |
|  | Intensity of frumentaceous taste | 3.2 | 3.6 | 4.0 | 4.4 | 4.4 |
|  | Swelling taste | 3.4 | 3.8 | 3.8 | 4.2 | 4.2 |
|  | Balance between intensity of rich taste and intensity of aroma | 3.2 | 3.6 | 3.8 | 4.2 | 3.8 |
|  | Craft beer-like flavor |  | A | A | A | A |

[Table 5]

|  |  | Sample 18 | Sample 19 | Sample 20 | Sample 21 |
|---|---|---|---|---|---|
| Composition of beverage | Apparent extract concentration (w/v %) | 8.0 | 8.0 | 8.0 | 8.0 |
|  | Bitterness value (BU) | 28.0 | 28.0 | 28.0 | 28.0 |
|  | Linalool concentration (ppb) | 5500 | 5500 | 5500 | 5500 |
|  | Geraniol concentration (ppb) | 250 | 250 | 250 | 250 |
|  | beta-citronellol concentration (ppb) | 60 | 60 | 60 | 60 |
|  | Myrcene concentration (ppb) | 0 | 2 | 4 | 6 |
|  | beta-ionone concentration (ppb) | 0.2 | 0.2 | 0.2 | 0.2 |
| Sensory evaluation | Intensity of fermented soybeans odor | 2.0 | 1.6 | 1.6 | 1.4 |
|  | Intensity of potato odor | 2.0 | 1.6 | 1.6 | 1.4 |
|  | Intensity of frumentaceous taste | 3.2 | 3.4 | 3.8 | 3.8 |
|  | Swelling taste | 3.4 | 3.4 | 3.8 | 4.0 |
|  | Balance between intensity of rich taste and intensity of aroma | 3.2 | 3.4 | 3.6 | 3.8 |
|  | Craft beer-like flavor |  |  | A | A |

[Table 6]

|  |  | Sample 22 | Sample 7 | Sample 23 | Sample 24 |
|---|---|---|---|---|---|
| Composition of beverage sample | Apparent extract concentration (w/v %) | 8.0 | 8.0 | 8.0 | 8.0 |
|  | Bitterness value (BU) | 28.0 | 28.0 | 28.0 | 28.0 |
|  | Linalool concentration (ppb) | 5500 | 5500 | 5500 | 5500 |
|  | Geraniol concentration (ppb) | 250 | 250 | 250 | 250 |
|  | beta-citronellol concentration (ppb) | 60 | 60 | 60 | 60 |
|  | Myrcene concentration (ppb) | 8 | 10 | 12 | 14 |
|  | beta-ionone concentration (ppb) | 0.2 | 0.2 | 0.2 | 0.2 |
| Sensory evaluation | Intensity of fermented soybeans odor | 1.2 | 1.0 | 1.0 | 1.0 |
|  | Intensity of potato odor | 1.2 | 1.0 | 1.0 | 1.0 |
|  | Intensity of frumentaceous taste | 4.0 | 4.4 | 4.4 | 4.4 |
|  | Swelling taste | 4.0 | 4.2 | 4.2 | 4.2 |
|  | Balance between intensity of rich taste and intensity of aroma | 3.8 | 4.2 | 3.6 | 3.6 |
|  | Craft beer-like flavor | A | A | A | A |

[Table 7]

| | | Sample 25 | Sample 26 | Sample 7 | Sample 27 | Sample 28 |
|---|---|---|---|---|---|---|
| Composition of beverage sample | Apparent extract concentration (w/v %) | 8.0 | 8.0 | 8.0 | 8.0 | 8.0 |
| | Bitterness value (BU) | 28.0 | 28.0 | 28.0 | 28.0 | 28.0 |
| | Linalool concentration (ppb) | 5500 | 5500 | 5500 | 5500 | 5500 |
| | Geraniol concentration (ppb) | 250 | 250 | 250 | 250 | 250 |
| | beta-citronellol concentration (ppb) | 60 | 60 | 60 | 60 | 60 |
| | Myrcene concentration (ppb) | 10 | 10 | 10 | 10 | 10 |
| | beta-ionone concentration (ppb) | 0 | 0.1 | 0.2 | 0.3 | 0.4 |
| Sensory evaluation | Intensity of fermented soybeans odor | 1.6 | 1.2 | 1.0 | 1.0 | 1.0 |
| | Intensity of potato odor | 1.6 | 1.2 | 1.0 | 1.0 | 1.0 |
| | Intensity of frumentaceous taste | 3.4 | 4.0 | 4.4 | 4.4 | 4.4 |
| | Swelling taste | 3.2 | 3.8 | 4.2 | 4.2 | 4.2 |
| | Balance between intensity of rich taste and intensity of aroma | 3.2 | 3.6 | 4.2 | 3.8 | 3.6 |
| | Craft beer-like flavor | | A | A | A | A |

## Claims

1. A low-alcohol beer-taste beverage including:

   an alcohol-removed wort fermented liquid;
   1000 to 7000 ppb of linalool;
   180 to 320 ppb of geraniol;
   35 to 75 ppb of beta-citronellol;
   3 to 15 ppb of myrcene; and
   0.05 to 0.5 ppb of beta-ionone.

2. The low-alcohol beer-taste beverage according to claim 1 having an alcohol concentration of less than 1 v/v%.

3. The low-alcohol beer-taste beverage according to claim 1 or 2 having a bitterness value of 25 BU or more and 35 BU or less.

4. The low-alcohol beer-taste beverage according to any one of claims 1 to 3, wherein the wort fermented liquid has an apparent extract concentration of 5 w/v% or more and 9 w/v% or less.

5. The low-alcohol beer-taste beverage according to any one of claims 1 to 4, wherein the wort fermented liquid has a malt use ratio of 50% or more.

6. The low-alcohol beer-taste beverage according to any one of claims 1 to 5, wherein the wort fermented liquid is a wort bottom fermented liquid.

7. A method for producing a low-alcohol beer-taste beverage, including: combining

   an alcohol-removed wort fermented liquid;
   1000 to 7000 ppb of linalool;

180 to 320 ppb of geraniol;
35 to 75 ppb of beta-citronellol;
3 to 15 ppb of myrcene; and
0.05 to 0.5 ppb of beta-ionone.

8. The method for producing a low-alcohol beer-taste beverage according to claim 7 including: adjusting the alcohol concentration to less than 1 v/v%.

9. The method for producing a low-alcohol beer-taste beverage according to claim 7 or 8, including: adjusting the bitterness value from 25 BU or more to 35 BU or less.

10. The method for producing a low-alcohol beer-taste beverage according to any one of claims 7 to 9, including: adjusting the apparent extract concentration of the wort fermented liquid from 5 w/v% or more to 9 w/v% or less.

## INTERNATIONAL SEARCH REPORT

| International application No. |
| --- |
| **PCT/JP2022/019423** |

### A. CLASSIFICATION OF SUBJECT MATTER

*C12C 12/04*(2006.01)i; *C12G 3/025*(2019.01)i; *C12H 3/00*(2019.01)i
FI:  C12C12/04; C12G3/025; C12H3/00

According to International Patent Classification (IPC) or to both national classification and IPC

### B. FIELDS SEARCHED

Minimum documentation searched (classification system followed by classification symbols)

C12C1/00-13/10; C12G3/00-3/08; C12H3/00-3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); FSTA/CAplus/AGRICOLA/BIOSIS/MEDLINE/EMBASE/REGISTRY (STN); Google

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-517559 A (UNIV. DO PORTO) 27 May 2010 (2010-05-27)<br>claims, examples | 1-10 |
| A | RIU-AUMATELL M. et al. Assessment of the aroma profiles of low-alcohol beers using HS-SPME-GC-MS. Food Res. Int. 2014, vol. 57, pages 196-202<br>fig. 1, table 2 | 1-10 |
| A | WO 2016/080007 A1 (ASAHI BREWERIES, LTD.) 26 May 2016 (2016-05-26)<br>examples, table, figures | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 July 2022** | **26 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/019423**

| Patent document cited in search report | | | Publication date (day/month/year) | Patent family member(s) | | | Publication date (day/month/year) |
|---|---|---|---|---|---|---|---|
| JP | 2010-517559 | A | 27 May 2010 | US claims, examples WO EP | 2010/0047422 2008/099325 2109372 | A1 A2 A1 | |
| WO | 2016/080007 | A1 | 26 May 2016 | US examples, tables, figures EP | 2017/0339983 3222705 | A1 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021070930 A1

- JP 2020096560 A

**Non-patent literature cited in the description**

- **KIYOSHI TAKOI.** Interpretation of craft beer aroma with geraniol metabolism: Analysis of the interaction of hop aroma components (3). Brewer's Association, 2014, vol. 109, 874-881